# EUROPÄISCHE PATENTANMELDUNG

(11) **EP 4 737 602 A1**
(43) Veröffentlichungstag der Anmeldung: **06.05.2026**
(21) Anmeldenummer: 24210647.4
(22) Anmeldetag: 04.11.2024
(51) Int. Cl.: C22C 32/00, C22C 21/00, B22D 25/02, C22C 1/02, C22C 21/02, F16D 65/12

(54) **SCHEIBENBREMSSCHEIBE FÜR EIN FAHRZEUG, EIN VERFAHREN ZUR HERSTELLUNG EINER SCHEIBENBREMSSCHEIBE SOWIE EIN VERFAHREN ZUR HERSTELLUNG EINER ALUMINIUMGUSSLEGIERUNG FÜR EINE SCHEIBENBREMSSCHEIBE**

(71) Anmelder: Nepsos AG, 9442 Berneck (CH)
(72) Erfinder: Eichberger, Marco, 87474 Buchenberg (DE)
(74) Vertreter: Neuhold, Alfred

(57) **Zusammenfassung**

Die Erfindung betrifft eine Scheibenbremsscheibe 20 für ein Fahrzeug mit einem Reibring 21, wobei die Scheibenbremsscheibe 20 aus einer Aluminiumgusslegierung gebildet ist, und die Aluminiumgusslegierung umfasst: 7.0 bis 10.0 Gew.-% Silizium; 0.25 bis 5.0 Gew.-% Titan; 12.0 bis 30.0 Gew.-% Siliciumcarbid Partikelverstärkung und dem Restbetrag aus Aluminium, und wobei die Siliciumcarbid Partikelverstärkung eine mittlere Partikelgrösse von zumindest kleiner als 30 Mikrometer aufweist. Weiters betrifft die Erfindung ein Verfahren zur Herstellung einer Scheibenbremsscheibe sowie ein Verfahren zur Herstellung einer Aluminiumlegierung für eine Scheibenbremsscheibe.

## Beschreibung

Die vorliegende Erfindung betrifft eine Scheibenbremsscheibe für ein Fahrzeug gemäss dem Patentanspruch 1 und ein Verfahren zur Herstellung einer Scheibenbremsscheibe gemäss dem Patentanspruch 10, sowie ein Verfahren zur Herstellung einer Aluminiumgusslegierung für eine Scheibenbremsscheibe gemäss dem Patentanspruch 15.

### Technologischer Hintergrund

Um den steigenden Anforderungen an die Kraftstoffeffizienz in der Kraftfahrzeugtechnik gerecht zu werden, ist bekannt, dass durch die Reduzierung des Gesamtgewichts eines Automobils dessen Kraftstoffverbrauch verbessert wird. Beispielsweise kann, vergleichbar zur typischen Stahlbremsscheibe, eine Reduzierung des Fahrzeuggewichts um 10 % zu einer Verbesserung des Kraftstoffverbrauchs um etwa 6-8 % führen. Daher ist es wünschenswert, für den Rahmen, die Karosserieteile und die Komponenten eines Fahrzeugs leichtere Materialien zu verwenden.

Zu solchen Materialien gehören hochfester Stahl, Magnesiumlegierungen, Aluminiumlegierungen, Kohlefasern und Polymerverbundstoffe.

Gleichzeitig ist es wichtig, dass bei der Wahl von Leichtbaumaterialien als Ersatz für herkömmliche, schwerere Werkstoffe ein hohes Maß an Festigkeit, Leistung und Haltbarkeit der daraus gefertigten Teile erhalten bleibt.

Im Falle der Bremsscheibe einer Fahrzeug-Scheibenbremse sollte eine Scheibenbremsscheibe aus leichtem Material gefertigt sein, eine hohe Wärmeleitfähigkeit und Wärmediffusionsfähigkeit sowie eine gute Festigkeit und eine hohe Kriechfestigkeit (z. B. Beständigkeit gegen Verformungen im Laufe der Zeit) bei erhöhten Temperaturen aufweisen.

Angesichts der bevorstehenden Einführung des Euro-7-Standards in Europa ab dem Jahr 2027 ist es notwendig innovative Bremsscheiben zu entwickeln, um für die Einhaltung der neuen Vorschriften und die Erfüllung der gestiegenen Anforderungen an Umweltfreundlichkeit und Leistungsfähigkeit gerüstet zu sein. Der Euro-7-Standard legt zukünftig erstmalig strenge Grenzwerte für Partikelemissionen aus Brems- und Reifenabrieb fest, um die Luftqualität zu verbessern und gesundheitliche Risiken durch Feinstaub zu minimieren. Für reine Elektrofahrzeuge wird der Grenzwert bei 3mg/km und für alle anderen Antriebsarten bei 7mg/km PM10-Emissionen liegen. Daher ist es notwendig eine Scheibenbremsscheibe zu entwickeln, die dem Euro-7-Standard genügen.

Aus dem Stand der Technik ist die WO2024/182060 A1 bekannt. Es wird eine Scheibenbremsscheibe für ein Fahrzeug bereitgestellt. Der Scheibenbremsrotor umfasst eine Kappe und einen Reibring, der sich in Umfangsrichtung von der Kappe aus erstreckt. Die Bremsscheibe besteht aus einer gegossenen hypereutektischen Aluminiumlegierung. Die hypereutektische Aluminiumlegierung enthält: 14,00 bis 25,00 Gew.-% Silizium; 4,90 bis 8,00 Gew.-% Kupfer; 0,05 bis 0,90 Gew.-% Nickel; 0,50 bis 1,50 Gew.-% Magnesium; 0,05 bis 1,20 Gew.-% Eisen; 0,05 bis 1,00 Gew.-% Mangan; 0,05 bis 1,00 Gew.-% Zink; 0,05 bis 1,20 Gew.-% Titan; 0,05 bis 1,20 Gew.-% Zirkonium; 0,05 bis 1,20 Gew.-% Vanadium; 0,001 bis 0,10 Gew.-% Phosphor; und den Rest Aluminium. Die Legierung kann auch andere Spurenelemente wie Chrom, Blei und Zinn in einer Menge von höchstens 0,20 Gew-% enthalten. Die Bremsscheibenrotoren können durch ein Hochdruck-Halbfeststoff-Druckgussverfahren, einschließlich Rheocasting, hergestellt werden.

Nachteilig an dieser bekannten Lösung ist, dass derartige Scheibenbremsscheiben lediglich für eine Reduktion des Gesamtgewichts eines Fahrzeuges erzeugt werden, um die Reichweite des Fahrzeugs zu erhöhen bzw. den Kraftstoffverbrauch zu reduzieren.

### Darstellung der Erfindung

Eine Aufgabe der Erfindung besteht darin, mindestens einen der Nachteile des Standes der Technik zu vermeiden. Insbesondere soll eine verbesserte Scheibenbremsscheibe geschaffen werden, welche im Bremsprozess in einem Fahrzeug weniger Feinstaubemission entwickelt. Weiters soll ein verbessertes Verfahren zur Herstellung einer Scheibenbremsscheibe sowie einer Aluminiumgusslegierung für eine Scheibenbremsscheibe geschaffen werden.

Diese Aufgabe wird durch die Merkmale der unabhängigen Patentansprüche gelöst. Vorteilhafte Weiterbildungen sind in den Figuren und in den abhängigen Patentansprüchen dargelegt.

Eine erfindungsgemässe Scheibenbremsscheibe für ein Fahrzeug umfasst zumindest einen Reibring, wobei die Scheibenbremsscheibe aus einer Aluminiumgusslegierung gebildet ist, und wobei die Aluminiumgusslegierung zumindest 7.0 bis 10.0 Gew.-% Silizium; 0.25 bis 5.0 Gew.-% Titan; 12.0 bis 30.0 Gew.-% Siliciumcarbid Partikelverstärkung und dem Restbetrag aus Aluminium umfasst, und wobei die Siliciumcarbid Partikelverstärkung eine mittlere Partikelgrösse von zumindest kleiner als 30 Mikrometer aufweist. Insbesondere ist die mittlere Partikelgrösse von zumindest grösser als 15 Mikrometer, sodass eine besonders vorteilhafte Ausführungsform der Scheibenbremsscheibe realisierbar ist.

Eine derartige Scheibenbremsscheibe weist im Betrieb in einem Bremsprozess an einem Fahrzeug eine deutlich reduzierte Bildung von Feinstaubemission auf. Da die erfinderische Scheibenbremsscheibe keinerlei Beschichtungen aufweist, ist diese einfach herstellbar und ist abnutzungsarm. Weiters weisst diese Scheibenbremsscheibe eine verbesserte Korrosionsbeständigkeit und vernachlässigbare Bremsgeräuschprobleme auf sowie ein reduziertes Gewicht. Durch das geringe Gewicht ergibt sich eine erhebliche Verbesserung der Fahrzeugreichweite des Fahrzeugs. Ein leichteres Fahrzeug benötigt weniger Energie, um bewegt zu werden, was direkt zu einem geringeren Energieverbrauch pro Kilometer führt. Bei Elektrofahrzeugen bedeutet dies eine längere Batteriereichweite, was die Fahrzeugnutzung effizienter gestaltet. Bei Verbrennungs- und Hybridfahrzeugen führt die Gewichtsreduzierung zu einer verbesserten Kraftstoffeffizienz und einem reduzierten CO2-Ausstoß.

Die erfinderische Scheibenbremsscheibe bietet eine echte Alternative zu herkömmlichen Stahlbremsscheiben an und eröffnet neue Möglichkeiten für eine verbesserte Leistung, Effizienz und Umweltfreundlichkeit in der Fahrzeugtechnologie. Die erfinderische Scheibenbremsscheibe zeichnet sich durch ihre überlegenen Materialeigenschaften aus. Durch die innovative Kombination der hier genannten Materialien bieten diese eine massive Reduktion der Feinstaubemission, bei zumindest gleichbleibenden technischen Anforderungen für Scheibenbremsen, gemäss dem Stand der Technik. Die erfinderische Scheibenbremsscheibe weist eine außergewöhnliche Korrosionsbeständigkeit, geringere thermische Verformung, verbesserte Wärmeableitung und signifikant höhere Widerstandsfähigkeit gegen Verschleiß im Vergleich zu herkömmlichen Stahlbremsen auf. Der Bremsenabrieb ist eine wesentliche Quelle von Feinstaub im Straßenverkehr, und durch die erhebliche Verringerung dieser Emissionen leistet die erfinderische Scheibenbremsscheibe einen wichtigen Beitrag zur Erreichung der Umweltziele aus des zukünftig verbindlichen Euro-7-Standards.

In einer vorteilhaften Ausführung liegt das Gew.-% Silizium bei 7.5%, vorteilhafter bei 8%, noch vorteilhafter bei 8.5%, noch vorteilhafter bei 9.0%, noch vorteilhafter bei 9.5%. Damit lassen sich einfache Aluminiumgusslegierungen mit AlSi7, oder AlSi8 bzw. AlSi9 bzw. AlSi10 herstellen. Silizium verleiht der Legierung ein hohes Elastizitätsmodul und einen niedrigen thermischen Ausdehnungskoeffizienten. Die Zugabe von Silizium ist unbedingt erforderlich, um die Fließfähigkeit des geschmolzenen Aluminiums zu verbessern und so die Gießbarkeit der Al-Si-Legierung gemäß der vorliegenden Erfindung zu steigern. Bei hohem Siliziumgehalt, also über 7 Gew.-%, weist die Legierung eine hervorragende Oberflächenhärte und Verschleißfestigkeit auf, sodass die Lebensdauer verlängert ist.

In einer vorteilhaften Ausführung liegt das Gew.-% Titan bei 0.5%, vorteilhafter bei 1%, noch vorteilhafter bei 1.5%, noch vorteilhafter bei 2%, noch vorteilhafter bei 2.5%, noch vorteilhafter bei 3%, noch vorteilhafter bei 3.5%, noch vorteilhafter bei 4%, noch vorteilhafter bei 4.5%. Die Al-Ti-Verbindungen wirken als Keime zur Korngrößenverfeinerung beim Erstarren der geschmolzenen Aluminiumgusslegierung beim Gießprozess. Titan fungiert außerdem als Dispersionsverstärkungsmittel und weisen eine der Aluminium-Festlösung ähnliche Gitterstruktur auf, um die mechanischen Eigenschaften bei hohen Temperaturen zu verbessern. Das Titan in der Aluminiumgusslegierung erhöht die Härte in der Legierung und reduziert den Abrieb der Scheibenbremsscheibe, sodass eine Feinstaubbildung minimiert ist. Ein besonderer Vorteil dieser erfinderischen Scheibenbremsscheibe ist, dass aufgrund des erhöhten Gew.-% an Titan die Schmelztemperatur der Legierung erhöht ist und dadurch die Hitzebeständigkeit der Scheibenbremsscheibe massgebliche verbessert ist.

In einer vorteilhaften Ausführung liegt das Gew.-% Siliciumcarbid Partikelverstärkung bei 12.5%, noch vorteilhafter bei 13%, noch vorteilhafter bei 13.5%, noch vorteilhafter bei 14%, noch vorteilhafter bei 14.5%, noch vorteilhafter bei 15%. noch vorteilhafter bei 15.5%, noch vorteilhafter bei 16%, noch vorteilhafter bei 16.5%, noch vorteilhafter bei 17%, noch vorteilhafter bei 17.5%, noch vorteilhafter bei 18%, noch vorteilhafter bei 18.5%, noch vorteilhafter bei 19%, noch vorteilhafter bei 19.5%, noch vorteilhafter bei 20%, noch vorteilhafter bei 20.5%, noch vorteilhafter bei 21%, noch vorteilhafter bei 21.5%, noch vorteilhafter bei 22%, noch vorteilhafter bei 22.5%, noch vorteilhafter bei 23%, noch vorteilhafter bei 23.5%, noch vorteilhafter bei 24%, noch vorteilhafter bei 24.5%, noch vorteilhafter bei 25%, noch vorteilhafter bei 25.5%, noch vorteilhafter bei 26%, noch vorteilhafter bei 26.5%, noch vorteilhafter bei 27%, noch vorteilhafter bei 27.5%, noch vorteilhafter bei 28%, noch vorteilhafter bei 28.5%, noch vorteilhafter bei 29%, noch vorteilhafter bei 29.5%. Die SiC-Partikel ist eine Keramik, welche extrem hart und widerstandsfähig ist. Wenn diese in eine Aluminiumgusslegierungen mit erhöhten Gew.-% eingebracht werden, erhöhen diese die Abrieb- und Verschleißfestigkeit des der Grundlegierung mit Aluminium erheblich.

Darüber hinaus erhöht Siliziumcarbid (SiC) die Festigkeit der Aluminiumgusslegierung, sodass die Zugfestigkeit sowie die Streckgrenze massgeblich erhöht wird. Zusätzlich weist Siliziumcarbid eine hohe Wärmeleitfähigkeit und Hitzebeständigkeit auf. Somit kann die Wärme schneller aus der AI- Legierung abgeleitet werden, wobei die Hitzebeständigkeit erhöht wird. Diese Eigenschaften sind besonders vorteilhaft für die hier vorliegend beschriebene erfindungsgemässe Scheibenbremsscheibe.

Die Siliciumcarbid Partikelverstärkung mit einer mittleren Partikelgrösse von kleiner 30 Mikrometer ermöglicht eine kostengünstige Herstellung der Scheibenbremsscheibe. Eine derartige Scheibenbremsscheibe weist eine erhöhte Oberflächenqualität sowie eine erhöhte Bremswirkung im Bremsprozess an einem Fahrzeug sowie einen geringeren Verschleiss und eine erhöhte Leistungsstabilität auf.

Die spezielle Zusammensetzung der Materialien in der erfinderischen Scheibenbremsscheibe sorgt für eine aussergewöhnliche Widerstandsfähigkeit gegenüber mechanischem Verschleiss. Dies trägt dazu bei, dass die Scheibenbremsscheibe länger ihre optimale Leistung beibehält. Herkömmliche Stahlbremsen neigen dazu, sich durch wiederholte Belastung und thermische Einflüsse abzunutzen und zu verformen, was ihre Effizienz und Sicherheit beeinträchtigten. Die vorliegende Scheibenbremsscheibe hingegen ist so konzipiert, dass sie diesen Belastungen besser und länger standhält. Die hohe Verschleißfestigkeit bedeutet weniger häufige Austausche und somit geringere Wartungskosten über die Lebensdauer des Fahrzeugs. Darüber hinaus trägt die längere Lebensdauer dieser Scheibenbremsscheibe zur Nachhaltigkeit bei, indem weniger Ressourcen für Ersatzteile und Wartungsarbeiten benötigt werden.

Die erfinderische Scheibenbremsscheibe bietet nicht nur verbesserte Leistung und Sicherheit, sondern auch eine sehr gute Umweltverträglichkeit und Nachhaltigkeit. Die überlegenen Materialeigenschaften der erfinderischen Scheibenbremsscheibe gewährleisten eine gute Recyclingsfähigkeit. Damit ist ein signifikanter Beitrag zum Umweltschutz geleistet, indem die Umweltbelastungen durch Feinstaubemissionen reduziert werden und durch eine signifikant längere Lebensdauer der Scheibenbremsscheibe Ressourcen geschont werden und die Abfallproduktion minimiert ist.

Vorzugsweise umfasst die Aluminiumgusslegierung zumindest eines der nachfolgenden Elemente: 0.5 bis 5.0 Gew.-% Kupfer; 0.5 bis 5.0 Gew.-% Nickel; 0.5 bis 5.0 Gew.-% Magnesium; 0.5 bis 5.0 Gew.-% Eisen; 0.1 bis 5.0 Gew.-% Zink, 0.1 bis 5 Gew.-% Bor. Die Kombination von Kupfer und Magnesium bildet eine feste Lösung in der Aluminiummatrix, um der Aluminiumgusslegierung aushärtbare Eigenschaften zu verleihen und dadurch die Hochtemperaturfestigkeit zu verbessern.

Die Kupferanteile beeinflussen die Festigkeit bei höheren Temperaturen im Betrieb der Scheibenbremsscheibe. Darüber hinaus kann die Festigkeit der Legierung verbessert werden, indem der Legierung im Verhältnis zu den Elementen Kupfer und Silizium der richtige Magnesiumanteil zugegeben wird. Darüber hinaus verbessert das einzigartige Cu-Mg-Verhältnis die chemische Reaktionen zwischen Aluminium- (AI), Kupfer- (Cu) und Magnesium- (Mg)-Atomen. Solche chemischen Reaktionen ermöglichen die Ausfällung eines höheren Volumenanteils innerhalb der Aluminiumgusslegierung. Dies führt zu außergewöhnlicher Zugfestigkeit und mikrostruktureller Stabilität bei erhöhten Temperaturen.

In einer vorteilhaften Ausführung liegt das Gew.-% Kupfer bei 0.5%, vorteilhafter bei 1%, noch vorteilhafter bei 1.5%, noch vorteilhafter bei 2%, noch vorteilhafter bei 2.5%, noch vorteilhafter bei 3%, noch vorteilhafter bei 3.5%, noch vorteilhafter bei 4%, noch vorteilhafter bei 4.5%.

In einer vorteilhaften Ausführung liegt das Gew.-% Magnesium bei 0.5%, vorteilhafter bei 1%, noch vorteilhafter bei 1.5%, noch vorteilhafter bei 2%, noch vorteilhafter bei 2.5%, noch vorteilhafter bei 3%, noch vorteilhafter bei 3.5%, noch vorteilhafter bei 4%, noch vorteilhafter bei 4.5%.

In einer vorteilhaften Ausführung liegt das Gew.-% Nickel bei 0.5%, vorteilhafter bei 1%, noch vorteilhafter bei 1.5%, noch vorteilhafter bei 2%, noch vorteilhafter bei 2.5%, noch vorteilhafter bei 3%, noch vorteilhafter bei 3.5%, noch vorteilhafter bei 4%, noch vorteilhafter bei 4.5%. Ein erhöhter Gew.-% an Nickel in der Scheibenbremsscheibe erhöht die Festigkeit sowie die Korrosionsbeständigkeit. Zudem erhöht Nickel die Hitzebeständigkeit, indem Nickel die Liquidustemperatur der Aluminiumgusslegierung erhöht.

In einer vorteilhaften Ausführung liegt das Gew.-% Eisen bei 0.5%, vorteilhafter bei 1%, noch vorteilhafter bei 1.5%, noch vorteilhafter bei 2%, noch vorteilhafter bei 2.5%, noch vorteilhafter bei 3%, noch vorteilhafter bei 3.5%, noch vorteilhafter bei 4%, noch vorteilhafter bei 4.5%. Ein erhöhter Gew.-% an Eisen erhöht es die Hitzebeständigkeit, indem es die Liquidustemperatur der Aluminiumgusslegierung erhöht.

In einer vorteilhaften Ausführung liegt das Gew.-% Zink bei 0.5%, vorteilhafter bei 1%, noch vorteilhafter bei 1.5%, noch vorteilhafter bei 2%, noch vorteilhafter bei 2.5%, noch vorteilhafter bei 3%, noch vorteilhafter bei 3.5%, noch vorteilhafter bei 4%, noch vorteilhafter bei 4.5%. Ein erhöhter Gew.-% an Zink erhöht die Festigkeit der Aluminiumgusslegierung.

In einer vorteilhaften Ausführung liegt das Gew.-% Bor bei 0.5%, vorteilhafter bei 1%, noch vorteilhafter bei 1.5%, noch vorteilhafter bei 2%, noch vorteilhafter bei 2.5%, noch vorteilhafter bei 3%, noch vorteilhafter bei 3.5%, noch vorteilhafter bei 4%, noch vorteilhafter bei 4.5%. Bor trägt wesentlich zur Kornverfeinerung in der Aluminiumgusslegierung bei, sodass der Abrieb und damit die Feinstaubbildung reduziert ist.

Bevorzugterweise weist die Siliciumcarbid Partikelverstärkung eine mittlere Partikelgrösse von zumindest kleiner als 18 Mikrometer auf. Die verminderte Partikelgrösse in der Aluminiumgusslegierung führt zu einer höheren Härte und einer weiteren Verminderung der Feinstaubemission. Insbesondere ist die mittlere Partikelgrösse von zumindest kleiner als 15 Mikrometer, vorteilhaft kleiner als 12, vorteilhaft kleiner als 9, sodass besonders vorteilhafte Ausführungsformen mit besonderen Härteeigenschaften der Scheibenbremsscheibe realisierbar sind.

Dabei ist je nach Grösse der Scheibenbremsscheibe und Anforderung im Betrieb eine explizite Materialzusammensetzung der Scheibenbremsscheibe erforderlich, wobei die Materialzusammensetzung der Aluminiumgusslegierung die hier beschriebenen Materialien umfasst.

Vorzugsweise umfasst die Scheibenbremsscheibe einen Topf, wobei der Reibring sich umlaufend von dem Topf erstreckt. Der Topf ermöglicht ein positionssicheres Anordnen der Scheibenbremsscheibe an einer Radachse.

Bevorzugterweise sind der Topf und der Reibring als monolithische Konstruktion einstückig ausgebildet. Durch die einzigartige Materialkombination und die besonders leichte Konstruktion ist die Scheibenbremsscheibe im Vergleich zu Stahlscheiben 60% leichter. Dies trägt nicht nur zur Verbesserung der Fahrzeugleistung bei, sondern reduziert auch den Energieverbrauch. Im Gegensatz zu herkömmlichen Stahlbremsen oder Verbundbremsen, die in feuchten oder salzhaltigen Umgebungen anfällig für Rost und Korrosion sind, bleibt diese Scheibenbremsscheibe auch unter extremen Bedingungen unversehrt. Diese Eigenschaft verlängert nicht nur die Lebensdauer der Scheibenbremsscheibe erheblich, sondern sorgt auch für eine gleichbleibende Bremsleistung über die gesamte Einsatzdauer.

Vorzugsweise weist die Scheibenbremsscheibe mehrere Öffnungen zur Innenbelüftung auf. Dies führt zu einem verbesserten Temperaturmanagement im Bremsprozess und zu einem geringeren Gewicht. Das geringe Gewicht dieser Scheibenbremsscheibe führt zu einer signifikanten Reduzierung der ungefederten Massen im Fahrzeug. Ungefederte Massen sind jene Teile eines Fahrzeugs, die nicht durch die Federung unterstützt werden, wie Räder, Reifen, Bremsen und Aufhängungskomponenten. Eine Reduzierung dieser Massen hat einen direkten und positiven Einfluss auf die Fahrdynamik. Leichtere Scheibenbremsscheiben verringern die Trägheit der rotierenden Masse, was eine schnellere und präzisere Reaktion auf Lenkbewegungen ermöglicht. Dies verbessert das Handling des Fahrzeugs erheblich, insbesondere in Kurven und bei schnellen Fahrmanövern. Darüber hinaus reduziert die geringere ungefederte Masse die Belastung der Federungssysteme, was zu einer besseren Dämpfung und einem insgesamt komfortableren Fahrgefühl führt.

Bevorzugterweise ist zumindest am Reibring eine Oberflächenstruktur vorhanden. Die Oberflächenstruktur bildet eine Transferschicht beim ersten Kontakt mit den Bremsbelägen im Bremsprozess aus. Die Transferschicht zwischen Scheibenbremsscheibe und Bremsbelag kann ein Schlüsselparameter für eine gleichbleibende Bremswirkung und Leistungsstabilität der Scheibenbremsscheibe im Betrieb über die gesamte Lebensdauer der Scheibenbremsscheibe sein.

Vorzugsweise ist die Oberflächenstruktur durch ein Ätzverfahren erhältlich. Bevorzugt ist die Oberflächenstruktur mithilfe einer Natronlaugen-Lösung erhältlich. Damit ist die Transferschicht zwischen der Scheibenbremsscheibe und der Bremsbelag besonders einfach herstellbar.

Bevorzugterweise ist die Scheibenbremsscheibe durch ein Kokillengießverfahren erhältlich. Insbesondere ist die Scheibenbremsscheibe durch ein Schwerkraft-Kokillengießverfahren erhältlich. Durch diese Giesstechnik verteilen sich die Siliciumcarbid-Partikel in der Schmelze gleichmässig. Eine homogene Partikelverteilung in der Scheibenbremsscheibe erhöht die Oberflächenqualität sowie die Bremswirkung und Leistungsstabilität der Scheibenbremsscheibe. Die Technik begünstigt einen dichten und porenfreien Aluminiumgusslegierung. Mit einer (Dauerform-)Kokille können bis zu 100.000 Abgüsse getätigt werden. Im Hinblick auf die Kosten der Formherstellung sieht man eine Menge von 10.000-15.000 Stück als Grenze der Wirtschaftlichkeit an.

Das Schwerkraft-Kokillengießverfahren ist die günstigste Variante zum Gießen der vorliegenden Scheibenbremsscheibe. Gerade bei Großserien fällt das kostentechnisch ins Gewicht. Gängige Vorrichtungen zum Gießen mittels Schwerkraft-Kokillengießverfahren sind weniger komplex und Anfangsinvestitionskosten sowie Wartungskosten sind im vgl. zu Nieder- oder Hochdruckguss günstig.

Alternativ dazu kann ein Niederdruck-Kokillengießverfahren eingesetzt werden. Dabei wird zum Füllen einer Kokille anstelle der Schwerkraft ein geringer Druck verwendet - typischerweise 20 bis 100 Kilopascal. Mit diesem Verfahren hergestellte Teile weisen eine hohe Genauigkeit auf. Dies ist auf den während der Erstarrung aufrechterhaltenen niedrigen Druck zurückzuführen. Daher erfolgt eine kontinuierliche Füllung der Kokille, wodurch die Volumenschrumpfung beim Erstarren der geschmolzenen Aluminiumgusslegierung ausgeglichen wird. Aufgrund der hohen Genauigkeit ist es die beste Methode zur Herstellung axialsymmetrischer Teile wie Scheibenbremsscheiben. Durch die hervorragende Formfüllung können geringere Aufmasse verwendet werden, sodass der Materialverbrauch minimiert ist. Die Niederdruckfüllung führt zu einer guten Formbarkeit aufgrund der Verbesserung der Fließfähigkeit der flüssigen Aluminiumgusslegierung. Daher weisen die mit diesem Verfahren hergestellten Gussteile eine klare Kontur und eine glatte Oberfläche auf. Generell eignet sich das Verfahren aufgrund seiner hohen Umformbarkeit ideal für die Herstellung von Gussteilen mit komplexen Geometrien. Da die Aluminiumgusslegierung unter Druck erstarrt, kann er diese homogen kristallisieren und eine kompakte Struktur bilden. Daher sind Gussteile, die mit dem Verfahren hergestellt werden, massiv und eignen sich für die Herstellung von Teilen, die gute Festigkeitswerte erfordern.

Ein erfindungsgemässes Verfahren zur Herstellung einer Scheibenbremsscheibe, insbesondere einer Scheibenbremsscheibe wie hier vorliegend offenbart, umfasst zumindest die folgenden Schritte:
a) Aufschmelzen einer Aluminiumlegierung, welche zumindest Aluminium, Silizium, und 10.0 bis 30.0 Gew.-% Siliciumcarbid Partikelverstärkung aufweist, wobei die Siliciumcarbid Partikelverstärkung eine mittlere Partikelgrösse von zumindest kleiner als 30 Mikrometer aufweist;
b) Beimengen von Titan zur aufgeschmolzenen Aluminiumlegierung;
c) Giessen der aufgeschmolzenen Komponenten in eine Form für eine Scheibenbremsscheibe in einem Kokillengießverfahren, insbesondere in einem Schwerkraft- Kokillengießverfahren.
d) Abkühlen der gegossenen Scheibenbremsscheibe.

Das erfinderische Verfahren ermöglicht die Herstellung einer Scheibenbremsscheibe, welche im Betrieb in einem Bremsprozess an einem Fahrzeug eine deutlich reduzierte Bildung von Feinstaubemission aufweist. Weiters weisst diese Scheibenbremsscheibe eine verbesserte Korrosionsbeständigkeit und vernachlässigbare Bremsgeräuschprobleme (besseres Noise Vibration Harshness -Verhalten (NVH) im Allgemeinen auf sowie ein reduziertes Gewicht. Durch das geringe Gewicht ergibt sich eine erhebliche Verbesserung der Reichweite des Fahrzeugs. Ein leichteres Fahrzeug benötigt weniger Energie, um bewegt zu werden, was direkt zu einem geringeren Energieverbrauch pro Kilometer führt. Bei Elektrofahrzeugen bedeutet dies eine längere Batteriereichweite, was die Fahrzeugnutzung effizienter gestaltet. Bei Verbrennungs- und Hybridfahrzeugen führt die Gewichtsreduzierung zu einer verbesserten Kraftstoffeffizienz und einem reduzierten CO2-Ausstoß.

Vorzugsweise wird die Scheibenbremsscheibe geätzt. Damit ist eine vorteilhafte Oberflächenstruktur erzeugbar, welche im Einsatz der Scheibenbremsscheibe eine Transferschicht zwischen der Scheibenbremsscheibe und dem Bremsbelag besonders einfach bildet.

Bevorzugterweise wird die Scheibenbremsscheibe bei einer Temperatur von 20°C bis 90°C geätzt. Damit lässt sich die Oberflächenstruktur effizient auf der gesamten Scheibenbremsscheibe herstellen. Vorzugsweise wird die Scheibenbremsscheibe bis zu 10 Minuten geätzt. Damit ist die Oberflächenstruktur reproduzierbar herstellbar.

Bevorzugterweise erfolgt das Ätzen mit einer Natronlaugen-Lösung. Insbesondere ist die Natronlaugen-Lösung eine 10 bis 50 % Natronlaugen-Lösung. Bevorzugt ist die Natronlaugen-Lösung eine 20 bis 30% Natronlaugen-Lösung. Die Natronlaugen-Lösung begünstigt das reproduzierbare Herstellen der Oberflächenstruktur auf der Scheibenbremsscheibe. Damit ist eine Serienherstellung der Scheibenbremsscheibe mit gleicher Qualität herstellbar.

Ein erfindungsgemässes Verfahren zur Herstellung einer Aluminiumlegierung für eine Scheibenbremsscheibe, insbesondere einer Scheibenbremsscheibe wie hier vorliegend offenbart, umfasst zumindest die folgenden Schritte:
a) Aufschmelzen einer Aluminiumlegierung, welche zumindest Aluminium, Silizium, und 10.0 bis 30.0 Gew.-% Siliciumcarbid Partikelverstärkung aufweist, wobei die Siliciumcarbid Partikelverstärkung eine mittlere Partikelgrösse von zumindest kleiner als 20 Mikrometer aufweist;
b) Beimengen zumindest von Titan zur aufgeschmolzenen Aluminiumlegierung;

Das erfinderische Verfahren ermöglicht die Herstellung einer Aluminiumlegierung für eine Scheibenbremsscheibe, welche im Betrieb in einem Bremsprozess an einem Fahrzeug eine deutlich reduzierte Bildung von Feinstaubemission aufweist.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind.

Die Bezugszeichenliste ist wie auch der technische Inhalt der Patentansprüche und Figuren Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Mittels der nachfolgenden Figuren wird anhand von Ausführungsbeispielen die Erfindung näher erläutert. Die Bezugszeichenliste ist Bestandteil der Offenbarung.

Positionsangaben, wie "oben", unten", "rechts" oder "links" sind jeweils auf die entsprechenden Darstellungen bezogen und sind nicht als einschränkend zu verstehen.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang der folgenden Ansprüche zu verlassen. Insbesondere umfasst die Erfindung ebenfalls Ausführungsformen mit jeglicher Kombination von Merkmalen, die vorstehend zu verschiedenen Aspekten und/oder Ausführungsformen genannt oder gezeigt sind.

Die Erfindung umfasst ebenfalls einzelne Merkmale in den Figuren, auch wenn sie dort im Zusammenhang mit anderen Merkmalen gezeigt sind und/oder vorstehend nicht genannt sind. Im Weiteren schliesst der Ausdruck "umfassen" und Ableitungen davon andere Elemente oder Schritte nicht aus. Ebenfalls schliesst der unbestimmte Artikel "ein" beziehungsweise "eine" und Ableitungen davon eine Vielzahl nicht aus. Die Funktionen mehrerer in den Ansprüchen aufgeführter Merkmale können durch eine Einheit erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Alle Bezugszeichen in den Ansprüchen sind nicht als den Umfang der Ansprüche einschränkend zu verstehen.

### Figurenbeschreibung

Die Figuren werden zusammenhängend und übergreifend beschrieben. Gleiche Bezugszeichen bedeuten gleiche Bauteile. Es zeigen
Fig. 1: eine erste Ausführungsform einer erfindungsgemässen Scheibenbremsscheibe in einer perspektivischen Ansicht,
Fig. 2: eine weitere Ausführungsform einer erfindungsgemässen Scheibenbremsscheibe in einer perspektivischen Ansicht,
Fig. 3: die Scheibenbremsscheibe gemäss Fig. 2 in einer Seitenansicht,
Fig. 4: die Scheibenbremsscheibe gemäss Fig. 2 in einer Schnittansicht,
Fig. 5: eine weitere Ausführungsform einer erfindungsgemässen Scheibenbremsscheibe in einer Schnittansicht,
Fig. 6: ein Flussdiagramm des erfindungsgemässen Verfahrens zur Herstellung einer Scheibenbremsscheibe gemäss Fig. 1, und
Fig. 7: ein Flussdiagramm des erfindungsgemässen Verfahrens zur Herstellung einer Aluminiumgusslegierung für eine Scheibenbremsscheibe gemäss Fig. 1.

### Ausführung der Erfindung

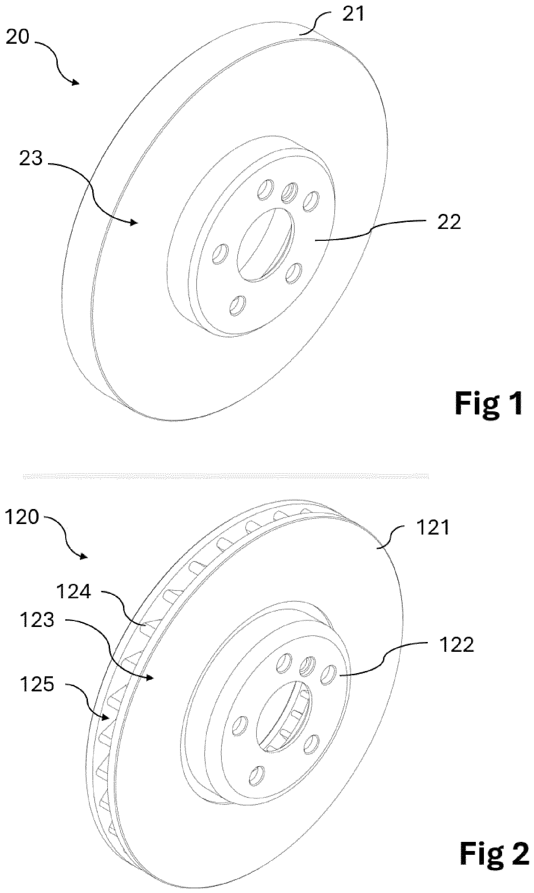

**Figur** 1 zeigt eine erste Ausführungsform einer erfinderischen Scheibenbremsscheibe 20 für ein Fahrzeug, welche einen Reibring 21 und einen Topf 22 umfasst. Die Scheibenbremsscheibe 20 besteht aus einer Aluminiumgusslegierung, die 8.0 Gew.-% Silizium, 3.5 Gew.-% Titan und 13.0 Gew.-% Siliciumcarbid Partikelverstärkung und dem Restbetrag aus Aluminium umfasst, und wobei die Siliciumcarbid Partikelverstärkung eine mittlere Partikelgrösse von 28 Mikrometer aufweist. Diese AISi8Ti3.5 +13 Gew.-% SiC-Scheibenbremsscheibe 20 weist eine Oberflächenstruktur 23 auf, welche mithilfe einer 30% Natronlaugen-Lösung hergestellt wurde, indem die mittels Schwerkraft-Kokillengiessverfahren gegossene Scheibenbremsscheibe 20 für 6 Minuten bei 36°C mit der 30% Natronlaugen-Lösung geätzt wurde.

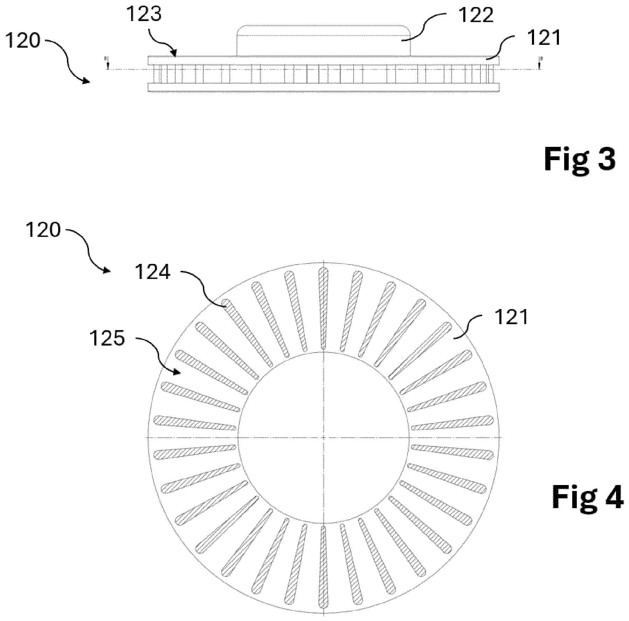

**Figur 2** bis **Figur 4** zeigen eine weitere Ausführungsform einer erfinderischen Scheibenbremsscheibe 120, welche einen Reibring 21 und einen Topf 122 umfasst. Die Scheibenbremsscheibe 120 ist innenbelüftet und weist Stege 124 und Öffnungen 125 auf, wobei die Umgebungsluft in den Öffnungen 125 zirkulieren kann. Die Stege 124 erstrecken sich radial von Innen nach Aussen auf der Scheibenbremsscheibe 120. Die Scheibenbremsscheibe 20 besteht aus einer Aluminiumgusslegierung, die 9.0 Gew.-% Silizium, 1.0 Gew.-% Magnesium, 1.0 Gew.-% Kupfer, 3.0 Gew.-% Nickel, 2.0 Gew.-% Eisen, 1.0 Gew.-% Titan und 20.0 Gew.-% Siliciumcarbid Partikelverstärkung und dem Restbetrag aus Aluminium umfasst, und wobei die Siliciumcarbid Partikelverstärkung eine mittlere Partikelgrösse von 17 Mikrometer aufweist. Diese AlSi9Mg*Cu1Ni3Fe2Ti1* +20 Gew% SiC-Scheibenbremsscheibe 120 weist eine Oberflächenstruktur 123 auf, welche mithilfe einer 25% Natronlaugen-Lösung hergestellt wurde, indem die mittels Schwerkraft-Kokillengiessverfahren gegossene Scheibenbremsscheibe 120 für 4 Minuten bei 55°C mit der 25% Natronlaugen-Lösung geätzt wurde.

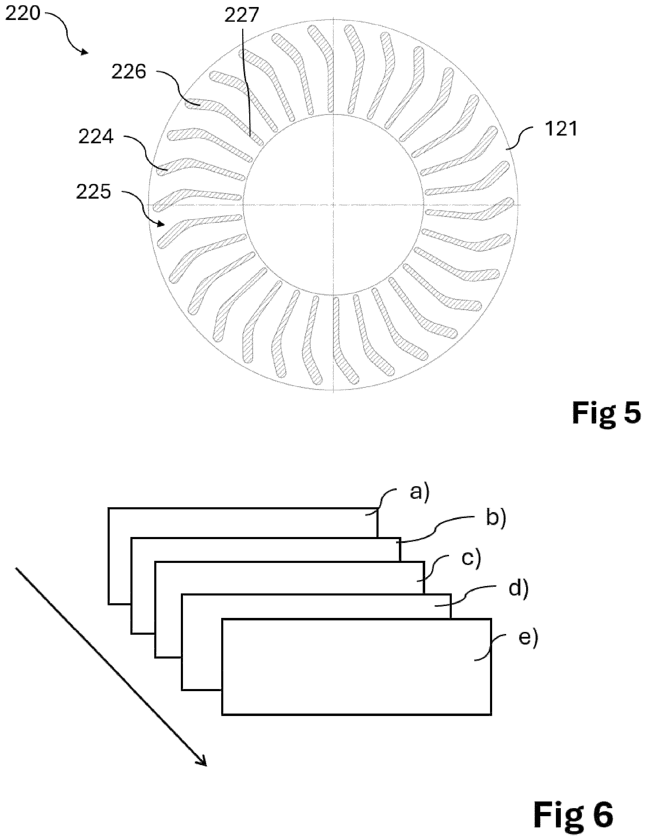

**Figur 5** zeigt eine weitere Ausführungsform einer erfinderischen Scheibenbremsscheibe 220, welche einen Reibring 221 umfasst. Die Scheibenbremsscheibe 120 ist innenbelüftet und weist Stege 224 und Öffnungen 225 auf, wobei die Umgebungsluft in den Öffnungen 225 zirkulieren kann. Die Stege 224 erstrecken sich weitgehend radial von Innen nach Aussen auf der Scheibenbremsscheibe 120 und weisen einen ersten Abschnitt 226 und einen zweiten Abschnitt 227 auf, wobei sich der zweite Abschnitt 227 zum ersten Abschnitt 226 in einer unterschiedlichen Richtung radial nach Aussen erstreckt. Die Scheibenbremsscheibe 220 besteht aus einer Aluminiumgusslegierung, die 9.0 Gew.-% Silizium, 1.0 Gew.-% Magnesium, 1.0 Gew.-% Kupfer, 1.5 Gew.-% Bor, 1.3 Gew.-% Titan und 29.0 Gew.-% Siliciumcarbid Partikelverstärkung und dem Restbetrag aus Aluminium umfasst, und wobei die Siliciumcarbid Partikelverstärkung eine mittlere Partikelgrösse von 22 Mikrometer aufweist. Diese AISi9MgCu18r1.5Ti1.3 +29 Gew% SiC-Scheibenbremsscheibe 220 weist eine Oberflächenstruktur 223 auf, welche mithilfe einer 12% Natronlaugen-Lösung hergestellt wurde, indem die mittels Schwerkraft-Kokillengiessverfahren gegossene Scheibenbremsscheibe 220 für 9 Minuten mit der 12% Natronlaugen-Lösung geätzt wurde.

**Figur 6** zeigt eine Ausführungsform des Verfahrens zur Herstellung der Scheibenbremsscheibe 20 gemäss **Figur 1** und umfasst zumindest die folgenden Schritte:
a) Aufschmelzen einer Aluminiumlegierung, welche zumindest Aluminium, 8.0 Gew.-% Silizium, und 13.0 Gew.-% Siliciumcarbid Partikelverstärkung aufweist, wobei die Siliciumcarbid Partikelverstärkung eine mittlere Partikelgrösse von zumindest kleiner als 28 Mikrometer aufweist;
b) Beimengen von 3.5 Gew.-% Titan zur aufgeschmolzenen Aluminiumlegierung;
c) Giessen der aufgeschmolzenen Komponenten in eine Form für eine Scheibenbremsscheibe in einem Schwerkraft-Kokillengiessverfahren,
d) Abkühlen und Erstarren der gegossenen Scheibenbremsscheibe 20.

Anschliessend wird im Schritt e) die Scheibenbremsscheibe 20 geätzt, wodurch sich eine Oberflächenstruktur auf der Scheibenbremsscheibe 20 bildet, welche im Einsatz der Scheibenbremsscheibe 20 eine Transferschicht zwischen der Scheibenbremsscheibe 20 und dem Bremsbelag besonders einfach bildet. Dabei wird eine 30% Natronlaugen-Lösung verwendet, um die Scheibenbremsscheibe 20 für 6 Minuten bei 36°C zu ätzen.

In einer nicht gezeigten Ausführungsform, erfolgt anstatt dem Schritt c) ein Giessen der aufgeschmolzenen Komponenten in eine Form für eine Scheibenbremsscheibe in einem Niederdruck-Kokillengiessverfahren.

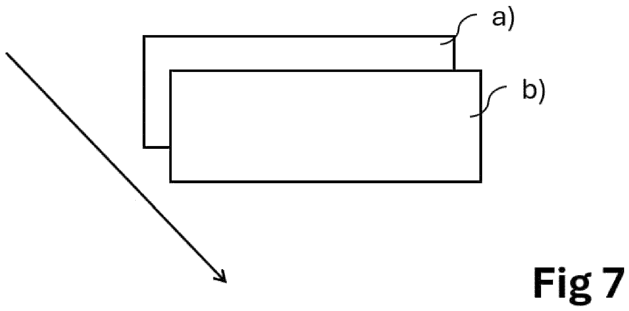

**Figur 7** zeigt eine Ausführungsform des Verfahrens zur Herstellung einer Aluminiumlegierung für eine Scheibenbremsscheibe 120 gemäss **Figur 2** bis **Figur 4** und umfasst zumindest die folgenden Schritte:
a) Aufschmelzen einer Aluminiumlegierung, welche zumindest Aluminium, 9.0 Gew.-% Silizium, und 20.0 Gew.-% Siliciumcarbid Partikelverstärkung aufweist, wobei die Siliciumcarbid Partikelverstärkung eine mittlere Partikelgrösse von zumindest kleiner als 17 Mikrometer aufweist;
b) Beimengen von 1.0 Gew.-% Magnesium, 1.0 Gew.-% Kupfer, 3.0 Gew.-% Nickel, 2.0 Gew.-% Eisen, 1.0 Gew.-% Titan zur aufgeschmolzenen Aluminiumlegierung.

### Bezugszeichenliste

- 20: Scheibenbremsscheibe
- 21: Reibring
- 22: Topf
- 23: Oberflächenstruktur

- 120: Scheibenbremsscheibe
- 121: Reibring
- 122: Topf
- 123: Oberflächenstruktur
- 124: Stege
- 125: Öffnungen

- 220: Scheibenbremsscheibe
- 221: Reibring
- 223: Oberflächenstruktur
- 224: Stege
- 225: Öffnungen
- 226: erster Abschnitt
- 227: zweiter Abschnitt

## Patentansprüche

1. Scheibenbremsscheibe (20; 120; 220) für ein Fahrzeug mit einem Reibring (21; 121; 221), wobei die Scheibenbremsscheibe (20; 120; 220) aus einer Aluminiumgusslegierung gebildet ist, und die Aluminiumgusslegierung umfasst: 7.0 bis 10.0 Gew.-% Silizium; 0.25bis 5.0 Gew.-% Titan; 12.0 bis 30.0 Gew.-% Siliciumcarbid Partikelverstärkung und dem Restbetrag aus Aluminium, und wobei die Siliciumcarbid Partikelverstärkung eine mittlere Partikelgrösse von zumindest kleiner als 30 Mikrometer aufweist.

2. Scheibenbremsscheibe nach Anspruch 1, **dadurch gekennzeichnet, dass** die Aluminiumgusslegierung zumindest eines der nachfolgenden Elemente umfasst: 0.5 bis 5.0 Gew.-% Kupfer; 0.5 bis 5.0 Gew.-% Nickel; 0.5 bis 5.0 Gew.-% Magnesium; 0.5 bis 5.0 Gew.-% Eisen; 0.1 bis 5.0 Gew.-% Zink, 0.1 bis 5 Gew.-% Bor.

3. Scheibenbremsscheibe nach Anspruch 1 oder 2, **dadurch gekennzeichnet, dass** die Siliciumcarbid Partikelverstärkung eine mittlere Partikelgrösse von zumindest kleiner als 18 Mikrometer aufweist.

4. Scheibenbremsscheibe nach einem der vorgenannten Ansprüche, **dadurch gekennzeichnet, dass** die Scheibenbremsscheibe (20; 120; 220) einen Topf (22; 122) umfasst, wobei der Reibring (21; 121) sich umlaufend von dem Topf (22; 122) erstreckt.

5. Scheibenbremsscheibe nach Anspruch 4, **dadurch gekennzeichnet, dass** der Topf (22; 122) und der Reibring (21; 121) als monolithische Konstruktion einstückig ausgebildet sind.

6. Scheibenbremsscheibe nach einem der vorgenannten Ansprüche, **dadurch gekennzeichnet, dass** die Scheibenbremsscheibe (120; 220) mehrere Öffnungen (125; 225) zur Innenbelüftung aufweist.

7. Scheibenbremsscheibe nach einem der vorgenannten Ansprüche, **dadurch gekennzeichnet, dass** zumindest am Reibring (21; 121; 221) eine Oberflächenstruktur (23; 123; 223) vorhanden ist.

8. Scheibenbremsscheibe nach Anspruch 7, **dadurch gekennzeichnet, dass** die Oberflächenstruktur (23; 123; 223) durch ein Ätzverfahren erhältlich ist, und bevorzugt mithilfe einer Natronlaugen-Lösung erhältlich ist.

9. Scheibenbremsscheibe nach einem der vorgenannten Ansprüche, **dadurch gekennzeichnet, dass** die Scheibenbremsscheibe (20; 120; 220) durch ein Kokillengießverfahren erhältlich ist und insbesondere durch ein Schwerkraft-Kokillengießverfahren erhältlich ist.

10. Verfahren zur Herstellung einer Scheibenbremsscheibe, insbesondere einer Scheibenbremsscheibe (20; 120; 220) nach einem der Ansprüche 1 bis 9, wobei das Verfahren zumindest die folgenden Schritte umfasst:
a) Aufschmelzen einer Aluminiumlegierung, welche zumindest Aluminium, Silizium, und 12.0 bis 30.0 Gew.-% Siliciumcarbid Partikelverstärkung aufweist, wobei die Siliciumcarbid Partikelverstärkung eine mittlere Partikelgrösse von zumindest kleiner als 30 Mikrometer aufweist;
b) Beimengen von Titan zur aufgeschmolzenen Aluminiumlegierung;
c) Giessen der aufgeschmolzenen Komponenten in eine Form für eine Scheibenbremsscheibe in einem Kokillengießverfahren, insbesondere in einem Schwerkraft- Kokillengießverfahren.
d) Abkühlen der gegossenen Scheibenbremsscheibe.

11. Verfahren zur Herstellung einer Scheibenbremsscheibe nach Anspruch 10, **dadurch gekennzeichnet, dass** die Scheibenbremsscheibe geätzt wird.

12. Verfahren zur Herstellung einer Scheibenbremsscheibe nach Anspruch 11, **dadurch gekennzeichnet, dass** die Scheibenbremsscheibe bei einer Temperatur von 20°C bis 90°C geätzt wird.

13. Verfahren zur Herstellung einer Scheibenbremsscheibe nach Anspruch 11 oder 12, **dadurch gekennzeichnet, dass** die Scheibenbremsscheibe bis zu 10 Minuten geätzt wird.

14. Verfahren zur Herstellung einer Scheibenbremsscheibe nach Anspruch 11 bis 13, **dadurch gekennzeichnet, dass** das Ätzen mit einer Natronlaugen-Lösung erfolgt, wobei insbesondere die Natronlaugen-Lösung eine 10 bis 50 %, bevorzugt eine 20 bis 30% Natronlaugen-Lösung ist.

15. Verfahren zur Herstellung einer Aluminiumgusslegierung für eine Scheibenbremsscheibe, insbesondere einer Scheibenbremsscheibe (20; 120; 220) nach einem der Ansprüche 1 bis 9, wobei das Verfahren zumindest die folgenden Schritte umfasst:
a) Aufschmelzen einer Aluminiumlegierung, welche zumindest Aluminium, Silizium, und 12.0 bis 30.0 Gew.-% Siliciumcarbid Partikelverstärkung aufweist, wobei die Siliciumcarbid Partikelverstärkung eine mittlere Partikelgrösse von zumindest kleiner als 30 Mikrometer aufweist;
b) Beimengen zumindest von Titan zur aufgeschmolzenen Aluminiumlegierung;
